# EUROPEAN PATENT APPLICATION

(11) **EP 4 603 559 A1**
(43) Date of publication of application: **20.08.2025**
(21) Application number: 23877223.0
(22) Date of filing: 05.10.2023
(51) Int. Cl.: C09J 171/00, C09J 7/38, C09J 11/06

(54) **CURABLE PERFLUOROPOLYETHER PRESSURE-SENSITIVE ADHESIVE COMPOSITION, AND PRESSURE-SENSITIVE ADHESIVE AND PRESSURE-SENSITIVE ADHESIVE TAPE BOTH INCLUDING CURED OBJECT FORMED THEREFROM**

(30) Priority: 11.10.2022 JP 2022163501
(71) Applicant: SHIN-ETSU CHEMICAL CO., LTD., Tokyo 1000005 (JP)
(72) Inventor: YASUDA Hiroyuki, Annaka-shi, Gunma 379-0224 (JP)
(74) Representative: Schicker, Silvia
(86) International application number: PCT/JP2023/036408
(87) International publication number: WO 2024/080218

(57) **Abstract**

The present invention is a curable perfluoropolyether adhesive composition including: (A) a linear perfluoropolyether compound having at least two alkenyl groups per molecule and having a perfluoropolyether structure containing a repeating unit represented by -CₐF₂ₐO- in a main chain, wherein "a" represents an integer of 1 to 6: 100 parts by mass; (B) an organosilicon compound having at least two hydrogen atoms each bonded to a silicon atom per molecule: an effective curing amount; (C) a hydrosilylation reaction catalyst: a catalytic amount; and (D) an antistatic agent: an effective amount. Thus, the present invention provides: a curable perfluoropolyether adhesive composition that forms a cured material having excellent heat resistance, weather resistance, water repellency, oil repellency, chemical resistance, solvent resistance, etc., particularly an adhesive capable of preventing static charge during peeling off an adherend attached to the adhesive or an adhesive-backed tape; and an adhesive and an adhesive tape using a cured material thereof.

## Description

### TECHNICAL FIELD

The present invention relates to: a curable perfluoropolyether pressure sensitive adhesive composition (hereinafter also referred to as a perfluoropolyether pressure sensitive adhesive composition) that forms a pressure sensitive adhesive (a perfluoropolyether rubber cured material or a perfluoropolyether gel cured material) having excellent heat resistance, oil resistance, chemical resistance, solvent resistance, low-temperature properties, moisture resistance, low gas permeability, etc., the pressure sensitive adhesive particularly being capable of preventing static charge during peeling off an adherend attached to the pressure sensitive adhesive or a pressure sensitive adhesive-backed tape; and a pressure sensitive adhesive and a pressure sensitive adhesive tape using a cured material thereof.

### BACKGROUND ART

Conventionally, it has been proposed that a cured material with well-balanced and excellent properties such as heat resistance, chemical resistance, solvent resistance, water repellency, oil repellency, and weather resistance can be obtained from a composition including: a linear perfluoropolyether compound having at least two alkenyl groups per molecule and a perfluoropolyether structure in a main chain; an organosilicon compound having two or more H-SiOSiO structures per molecule; and a hydrosilylation reaction catalyst (Patent Documents 1 and 2).

Meanwhile, pressure sensitive adhesives are used in various applications, including, among others, labels attached to products and pressure sensitive adhesive tapes. Recently, along with the advancement of technologies relating to electronic terminals, the applications have expanded, as typified by pressure sensitive adhesive films for display protection and protective films for use during product manufacturing processes. Further, besides the surface protection, pressure sensitive adhesives are also used in optical members by taking advantage of transparency of the material, and the usage thereof inside products is also being developed, as typified by Optical Clear Adhesive Tape (OCA tape).

Pressure sensitive adhesives are mainly classified into acrylic, rubber, silicone, or other types, each having advantages and disadvantages. Silicone pressure sensitive adhesives are disadvantageous in terms of cost as compared with acrylic and rubber pressure sensitive adhesives, but are superior to the other two types of pressure sensitive adhesives in properties such as heat resistance, cold resistance, weather resistance, chemical resistance, and electric insulation.

Recently, mobile phones and other terminals have achieved wide use, and most pressure sensitive adhesive films for display protection of these terminals utilize silicone pressure sensitive adhesives. Since silicone, by nature, has good wettability to an adherend, taping together the pressure sensitive adhesive film does not cause entrainment of air bubbles, displacement of the pressure sensitive adhesive film or peeling off thereof by itself, while good reworkability of silicone allows re-application of the pressure sensitive adhesive film (Patent Document 3). Moreover, the same applies to protective films for use during product manufacturing processes, where heat resistance, etc. are further required, leading to large usage of pressure sensitive adhesive films utilizing silicone pressure sensitive adhesives.

Moreover, among mobile phones, terminals called a smartphone with higher functions than conventional ones have spread rapidly. Many smartphones can be operated by touching a display called a touch panel, instead of conventional buttons. Similar terminals include tablet terminals, which are portable computers equipped with touch panels. As an area of the display increases with the spread of these terminals, demand for pressure sensitive adhesive films for screen protection is increasing.

However, although such silicone pressure sensitive adhesives have sufficient performance for most applications, there has been a strong need for the development of a pressure sensitive adhesive composition with excellent chemical resistance and solvent resistance for applications such as barcode labels for use around vehicle engines and in clinical and pathological examination processes, where additional chemical resistance and solvent resistance are required.

In this context, a curable perfluoropolyether pressure sensitive adhesive composition has been proposed (Patent Document 4). It has been disclosed that this composition can yield a cured material excellent not only in heat resistance, weather resistance, water repellency, oil repellency, etc., but also in chemical resistance and solvent resistance. However, all the illustrated compositions are nonconductive pressure sensitive adhesives having a volume resistivity of 1×10 cm⁹ Ω·m or more, and there is concern, particularly in a case of using an electronic component as an adherend, that static electricity generated during peeling may cause electrostatic damage.

### CITATION LIST

### PATENT LITERATURE

Patent Document 1: JP 2990646 B
Patent Document 2: JP 2000-248166 A
Patent Document 3: JP H07-197008 A
Patent Document 4: JP 2019-38904 A

### SUMMARY OF INVENTION

### TECHNICAL PROBLEM

The present invention has been made in view of the above circumstances and aims to provide: a curable perfluoropolyether pressure sensitive adhesive composition (hereinafter also referred to as a perfluoropolyether pressure sensitive adhesive composition) that forms a cured material having excellent heat resistance, weather resistance, water repellency, oil repellency, chemical resistance, solvent resistance, etc., and particularly forms a pressure sensitive adhesive (a perfluoropolyether rubber cured material or a perfluoropolyether gel cured material) capable of preventing static charge during peeling off an adherend attached to the pressure sensitive adhesive or a pressure sensitive adhesive-backed tape; and a pressure sensitive adhesive and a pressure sensitive adhesive tape using a cured material thereof.

### SOLUTION TO PROBLEM

To achieve the above object, a first aspect of the present invention provides a curable perfluoropolyether pressure sensitive adhesive composition including:
(A) a linear perfluoropolyether compound having at least two alkenyl groups per molecule and having a perfluoropolyether structure containing a repeating unit represented by -CₐF₂ₐO- in a main chain, wherein "a" represents an integer of 1 to 6: 100 parts by mass;
(B) an organosilicon compound having at least two hydrogen atoms each bonded to a silicon atom per molecule: an effective curing amount;
(C) a hydrosilylation reaction catalyst: a catalytic amount; and
(D) an antistatic agent: an effective amount.

Such a curable perfluoropolyether pressure sensitive adhesive composition including the components (A) to (D) as in the first aspect of the present invention can have excellent heat resistance, weather resistance, water repellency, oil repellency, oil resistance, low-temperature properties, moisture resistance, low gas permeability, etc., and further, can particularly prevent static charge during peeling off an adherend attached to a pressure sensitive adhesive or a pressure sensitive adhesive-backed tape. Moreover, a curable perfluoropolyether pressure sensitive adhesive composition including the components (A) to (D) of the present invention as described above but no organic solvent can provide a rubber cured material (perfluoropolyether rubber cured material).

Additionally, the first aspect of the present invention provides the curable perfluoropolyether pressure sensitive adhesive composition, wherein the component (A) is a linear perfluoropolyether compound represented by the following general formula (1), 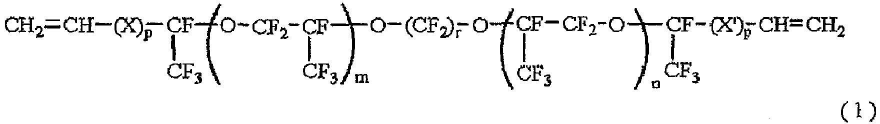 wherein X represents -CH₂-, -CH₂O-, -CH₂OCH₂-, or - Y-NR¹-CO-, provided that Y represents -CH₂- or a group represented by the following structural formula (Z) (i.e. a dimethylphenylsilylene group represented at an ortho, meta, or para position), and R¹ represents a hydrogen atom, a methyl group, a phenyl group, or an allyl group; X' represents -CH₂-, -OCH₂-, -CH₂OCH₂-, or - CO-NR²-Y'-, provided that Y' represents -CH₂- or a group represented by the following structural formula (Z') (i.e. a dimethylphenylsilylene group represented at an ortho, meta, or para position), and R² represents a hydrogen atom, a methyl group, a phenyl group, or an allyl group; "p" independently represents 0 or 1; "r" represents an integer of 2 to 6; "m" and "n" each represents an integer of 0 to 600, and a sum of "m" and "n" is 50 to 600.

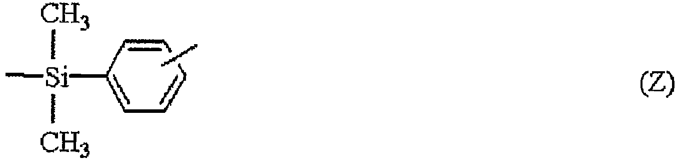

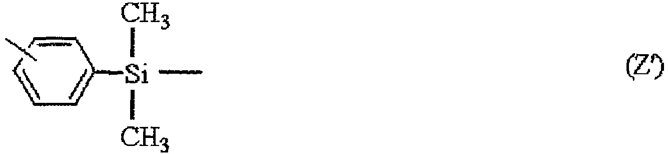

When the curable perfluoropolyether pressure sensitive adhesive composition includes such component (A), the composition can provide a cured material (pressure sensitive adhesive) having more excellent chemical resistance and solvent resistance, and also have a high adhesive strength.

Additionally, the first aspect of the present invention provides the curable perfluoropolyether pressure sensitive adhesive composition, wherein the antistatic agent as the component (D) is at least one selected from a conducting polymer, a surfactant, metal, metal oxide, and a carbon material.

In the present invention, such antistatic agent can be used as the component (D).

Further, the first aspect of the present invention provides the curable perfluoropolyether pressure sensitive adhesive composition further including (E) an addition reaction regulator in an amount of 0.01 to 5 parts by mass relative to 100 parts by mass of the component (A).

When the curable perfluoropolyether pressure sensitive adhesive composition includes the component (E) as in the present invention, no thickening or gelling of the pressure sensitive adhesive composition will occur during preparation or application of the composition onto a substrate, resulting in improved workability, and the curable perfluoropolyether pressure sensitive adhesive composition can have excellent heat resistance, weather resistance, water repellency, oil repellency, oil resistance, low-temperature properties, moisture resistance, low gas permeability, etc., and particularly prevent static charge during peeling off an adherend attached to a pressure sensitive adhesive or a pressure sensitive adhesive-backed tape.

Additionally, the first aspect of the present invention provides the perfluoropolyether pressure sensitive adhesive composition capable of providing a cured material having a volume resistivity of 1.0×10² to 1.0×10⁸ Ω·m.

When the curable perfluoropolyether pressure sensitive adhesive composition includes the antistatic agent as the component (D) of the present invention and the volume resistivity is within the above range, the pressure sensitive adhesive composition particularly has sufficient antistatic performance during peeling off an adherend attached to a pressure sensitive adhesive or a pressure sensitive adhesive-backed tape.

Additionally, the first aspect of the present invention provides the curable perfluoropolyether pressure sensitive adhesive composition capable of curing to form a pressure sensitive adhesive having an adhesive strength of 0.001 N/25 mm to 10.0 N/25 mm.

When the curable perfluoropolyether pressure sensitive adhesive composition is capable of providing the cured material having such adhesive strength, the composition can have favorable adhesion to an adherend.

Moreover, a second aspect of the present invention provides a curable perfluoropolyether pressure sensitive adhesive composition including:
(A) a linear perfluoropolyether compound having at least two alkenyl groups per molecule and having a perfluoropolyether structure containing a repeating unit represented by -CₐF₂ₐO- in a main chain, wherein "a" represents an integer of 1 to 6: 100 to 40 parts by mass;
(F) a polyfluoromonoalkenyl compound having one alkenyl group per molecule and having a perfluoropolyether structure in a main chain: 0 to 60 parts by mass, provided that a total amount of the component (A) and the component (F) is 100 parts by mass;
(B) an organosilicon compound having at least two hydrogen atoms each bonded to a silicon atom per molecule: an effective curing amount;
(C) a hydrosilylation reaction catalyst: a catalytic amount; and
(D) an antistatic agent: an effective amount.

Such a curable perfluoropolyether pressure sensitive adhesive composition including the components (A) to (D) and (F) as in the second aspect of the present invention but preferably containing no organic solvent in the composition can have excellent heat resistance, weather resistance, water repellency, oil repellency, oil resistance, low-temperature properties, moisture resistance, low gas permeability, etc., and further, can particularly prevent static charge during peeling off an adherend attached to a pressure sensitive adhesive or a pressure sensitive adhesive-backed tape. Moreover, the curable perfluoropolyether pressure sensitive adhesive composition including the components (A) to (D) and (F) of the present invention as described above can provide a rubber or gel cured material (a perfluoropolyether rubber cured material or gel cured material).

Additionally, the second aspect of the present invention provides the curable perfluoropolyether pressure sensitive adhesive composition, wherein the component (A) is a linear perfluoropolyether compound represented by the following general formula (1), 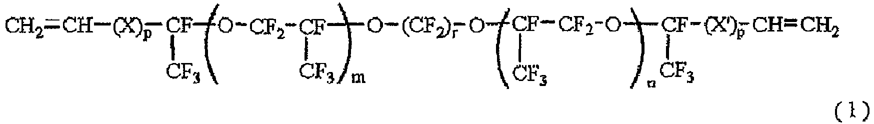 wherein X represents -CH₂-, -CH₂O-, -CH₂OCH₂-, or - Y-NR¹-CO-, provided that Y represents -CH₂- or a group represented by the following structural formula (Z) (i.e. a dimethylphenylsilylene group represented at an ortho, meta, or para position), and R¹ represents a hydrogen atom, a methyl group, a phenyl group, or an allyl group; X' represents -CH₂-, -OCH₂-, -CH₂OCH₂-, or - CO-NR²-Y'-, provided that Y' represents -CH₂- or a group represented by the following structural formula (Z') (i.e. a dimethylphenylsilylene group represented at an ortho, meta, or para position), and R² represents a hydrogen atom, a methyl group, a phenyl group, or an allyl group; "p" independently represents 0 or 1; "r" represents an integer of 2 to 6; "m" and "n" each represents an integer of 0 to 600, and a sum of "m" and "n" is 50 to 600.

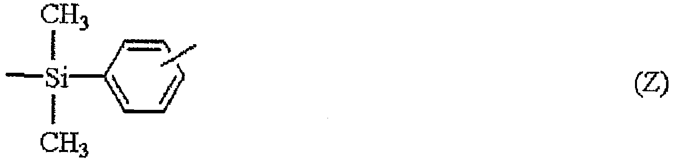

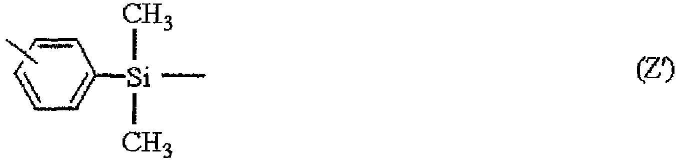

When the curable perfluoropolyether pressure sensitive adhesive composition includes such component (A), the composition can provide a cured material (pressure sensitive adhesive) having more excellent chemical resistance and solvent resistance, and also have a high adhesive strength.

Additionally, the second aspect of the present invention provides the curable perfluoropolyether pressure sensitive adhesive composition, wherein the component (F) is a polyfluoromonoalkenyl compound represented by the following general formula (2), Rf¹-(X')ₚ-CH=CH₂ (2)
wherein X' represents -CH₂-, -OCH₂-, -CH₂OCH₂-, or - CO-NR²-Y'-, provided that Y' represents -CH₂- or a group represented by the following structural formula (Z') (i.e. a dimethylphenylsilylene group represented at an ortho, meta, or para position), 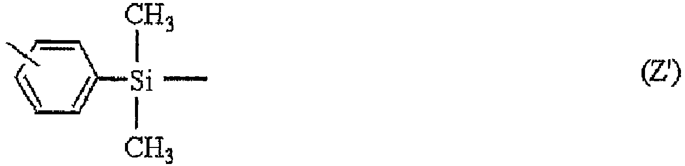 and R² represents a hydrogen atom, a methyl group, a phenyl group, or an allyl group; "p" represents 0 or 1; and Rf¹ represents a perfluoropolyether structure represented by a general formula, F-[CF(CF₃)CF₂O]_{w}-CF(CF₃)-, wherein "w" represents an integer of 1 to 500.

When the curable perfluoropolyether pressure sensitive adhesive composition includes such component (F), the composition can provide a cured material (pressure sensitive adhesive) having more excellent chemical resistance and solvent resistance.

Additionally, the second aspect of the present invention provides the curable perfluoropolyether pressure sensitive adhesive composition, wherein the antistatic agent as the component (D) is at least one selected from a conducting polymer, a surfactant, metal, metal oxide, and a carbon material.

In the present invention, such antistatic agent can be used as the component (D).

Further, the second aspect of the present invention provides the curable perfluoropolyether pressure sensitive adhesive composition further including (E) an addition reaction regulator in an amount of 0.01 to 5 parts by mass relative to 100 parts by mass of the component (A) and the component (F) in total.

When the curable perfluoropolyether pressure sensitive adhesive composition includes the component (E) as in the present invention, no thickening or gelling of the pressure sensitive adhesive composition will occur during preparation or application of the composition onto a substrate, resulting in improved workability, and the curable perfluoropolyether pressure sensitive adhesive composition can have excellent heat resistance, weather resistance, water repellency, oil repellency, oil resistance, low-temperature properties, moisture resistance, low gas permeability, etc., and particularly prevent static charge during peeling off an adherend attached to a pressure sensitive adhesive or a pressure sensitive adhesive-backed tape.

Additionally, the second aspect of the present invention provides the perfluoropolyether pressure sensitive adhesive composition capable of providing a cured material having a volume resistivity of 1.0×10² to 1.0×10⁸ Ω·m.

When the curable perfluoropolyether pressure sensitive adhesive composition includes the antistatic agent as the component (D) of the present invention and the volume resistivity is within the above range, the pressure sensitive adhesive composition particularly has sufficient antistatic performance during peeling off an adherend attached to a pressure sensitive adhesive or a pressure sensitive adhesive-backed tape.

Additionally, the second aspect of the present invention provides the curable perfluoropolyether pressure sensitive adhesive composition capable of curing to form a pressure sensitive adhesive having an adhesive strength of 0.001 N/25 mm to 10.0 N/25 mm.

When the curable perfluoropolyether pressure sensitive adhesive composition is capable of providing the cured material having such adhesive strength, the composition can have favorable adhesion to an adherend.

Moreover, the first or second aspect of the present invention provides a pressure sensitive adhesive including a cured material of the curable perfluoropolyether pressure sensitive adhesive composition.

In this manner, the curable perfluoropolyether pressure sensitive adhesive composition of the present invention can be used as a pressure sensitive adhesive that provides a perfluoropolyether rubber cured material or a perfluoropolyether gel cured material excellent in adhesion to various substrates.

Moreover, the first or second aspect of the present invention provides a pressure sensitive adhesive tape including a cured material layer of the curable perfluoropolyether pressure sensitive adhesive composition laminated on a substrate.

In this manner, the cured material layer of the curable perfluoropolyether pressure sensitive adhesive composition of the present invention (a pressure sensitive adhesive layer composed of a perfluoropolyether rubber cured material or a perfluoropolyether gel cured material) can be laminated on a substrate and thus used as a pressure sensitive adhesive tape having a conductive pressure sensitive adhesive layer.

### ADVANTAGEOUS EFFECTS OF INVENTION

As described above, the inventive curable perfluoropolyether pressure sensitive adhesive composition can provide a cured material (pressure sensitive adhesive) in a rubber or gel form, which has excellent heat resistance, weather resistance, oil resistance, low-temperature properties, moisture resistance, low gas permeability, water repellency, oil repellency, chemical resistance, solvent resistance, etc., and particularly can prevent static charge during peeling off an adherend attached to the pressure sensitive adhesive or a pressure sensitive adhesive-backed tape.

### DESCRIPTION OF EMBODIMENTS

As described above, it has been demanded to develop: a curable perfluoropolyether pressure sensitive adhesive composition that provides a cured material (pressure sensitive adhesive) having excellent heat resistance, weather resistance, water repellency, oil repellency, etc. and particularly capable of preventing static charge during peeling off an adherend attached to the pressure sensitive adhesive or a pressure sensitive adhesive-backed tape; and a pressure sensitive adhesive and a pressure sensitive adhesive tape including a cured material thereof.

As a result of an intensive investigation to achieve the above object, the present inventors have found that a particular perfluoropolyether pressure sensitive adhesive composition according to the present invention enables to obtain a composition capable of providing a cured material in a rubber or gel form (a perfluoropolyether rubber cured material or a perfluoropolyether gel cured material) having more excellent chemical resistance and solvent resistance than conventional silicone pressure sensitive adhesives, and particularly providing a cured material (pressure sensitive adhesive) capable of preventing static charge during peeling off an adherend attached to the pressure sensitive adhesive or a pressure sensitive adhesive-backed tape, leading to the completion of the present invention.

### <First Aspect>

Thus, the first aspect of the present invention is a curable perfluoropolyether pressure sensitive adhesive composition that provides a cured material in a rubber form (perfluoropolyether rubber cured material), the composition including:
(A) a linear perfluoropolyether compound having at least two alkenyl groups per molecule and having a perfluoropolyether structure containing a repeating unit represented by -CₐF₂ₐO- in a main chain, wherein "a" represents an integer of 1 to 6: 100 parts by mass;
(B) an organosilicon compound having at least two hydrogen atoms each bonded to a silicon atom per molecule: an effective curing amount;
(C) a hydrosilylation reaction catalyst: a catalytic amount; and
(D) an antistatic agent: an effective amount.

Hereinafter, the first aspect of the present invention will be described in detail. However, the present invention is not limited thereto.

### Component (A)

In the first aspect of the present invention, the component (A) contained in the curable perfluoropolyether pressure sensitive adhesive composition of the present invention acts as a main agent (base polymer) of the curable perfluoropolyether pressure sensitive adhesive composition of the present invention. The component (A) is a linear perfluoropolyether compound having at least two alkenyl groups per molecule and having a perfluoropolyether structure (perfluorooxyalkylene structure), preferably a divalent perfluorooxyalkylene structure, in a main chain.

Examples of the perfluorooxyalkylene structure herein include those containing a number of repeating structures of oxyalkylene units represented by -CₐF₂ₐO-(wherein "a" in each unit independently represents an integer of 1 to 6), for example, the one represented by the following general formula (3),

(CₐF₂ₐO)_{q} (3)

wherein "q" represents an integer of 50 to 600, preferably an integer of 50 to 400, and more preferably an integer of 50 to 200.

Examples of each repeating structure -CₐF₂ₐO- (i.e. the oxyalkylene unit) constituting the perfluorooxyalkylene structure represented by the above formula (3) include the following structures and the like. Note that the above perfluoroalkyl ether structure may be composed of only one kind or a combination of two or more kinds of these repeating structures.

-CF₂O-

-CF₂CF₂O-

-CF₂CF₂CF₂O-

-CF(CF₃)CF₂O-

-CF₂CF₂CF₂CF₂O-

-CF₂CF₂CF₂CF₂CF₂CF₂O-

-C(CF₃)₂O-

Among these, the following structures are particularly suitable.

-CF₂O-

-CF₂CF₂O-

-CF₂CF₂CF₂O-

-CF(CF₃)CF₂O-

Note that in the present invention, "linear" means that the respective repeating units -CₐF₂ₐO- (oxyalkylene units) constituting the perfluoropolyether structure (perfluorooxyalkylene structure) in the main chain are linearly bonded to each other, and each repeating unit (oxyalkylene unit) itself may be a linear oxyalkylene unit or a branched oxyalkylene unit (for example, - CF(CF₃)CF₂O-, -C(CF₃)₂O-, etc.).

The alkenyl group in this linear perfluoropolyether compound as the component (A) preferably has 2 to 8 carbon atoms, particularly 2 to 6 carbon atoms, and also has a CH₂=CH- structure at a terminal. For example, preferred is a group having a CH₂=CH- structure at a terminal of a vinyl group, an allyl group, a propenyl group, an isopropenyl group, a butenyl group, a hexenyl group, or the like, particularly a vinyl group, an allyl group, or the like. This alkenyl group may be directly bonded to both terminals of the perfluoropolyether structure, particularly the divalent perfluorooxyalkylene structure constituting the main chain of the linear perfluoropolyether compound, or may be bonded through a divalent linking group, for example, -CH₂-, -CH₂O-, -CH₂OCH₂-, -Y-NR-CO-, or the like, provided that Y represents -CH₂- or a group represented by the following structural formula (Z), 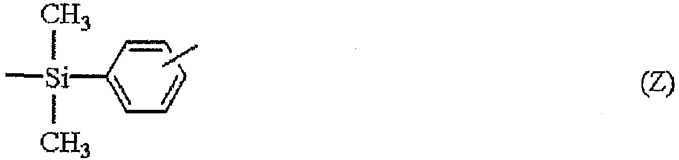 (a dimethylphenylsilylene group represented at an ortho, meta, or para position), and R represents a hydrogen atom, a methyl group, a phenyl group, or an allyl group. Additionally, the component (A) has at least two alkenyl groups per molecule.

Examples of the component (A) include polyfluorodialkenyl compounds represented by the following general formula (4) or (5),

CH₂=CH-(X)ₚ-Rf²-(X')ₚ-CH=CH₂ (4)

CH₂=CH-(X)ₚ-Q-Rf²-Q-(X')ₚ-CH=CH₂ (5)

wherein X independently represents -CH₂-, -CH₂O-, - CH₂OCH₂-, or -Y-NR¹-CO-, provided that Y represents -CH₂- or a group represented by the following structural formula (Z), and R¹ represents a hydrogen atom, a methyl group, a phenyl group, or an allyl group; X' represents -CH₂-, -OCH₂-, -CH₂OCH₂-, or -CO-NR²-Y'-, provided that Y' represents -CH₂- or a group represented by the following structural formula (Z'), and R² represents a hydrogen atom, a methyl group, a phenyl group, or an allyl group, 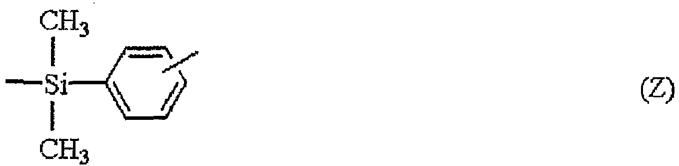 (a dimethylphenylsilylene group represented at an ortho, meta, or para position) 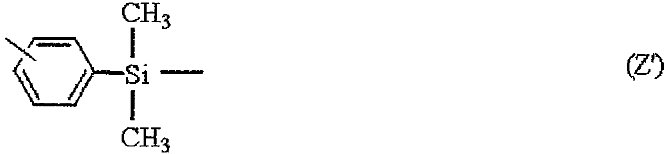 (a dimethylphenylsilylene group represented at an ortho, meta, or para position);
Rf² represents a divalent perfluoropolyether structure (perfluorooxyalkylene structure), preferably the one represented by the above formula (3), i.e. (CₐF₂ₐO)_{q}; Q represents a divalent hydrocarbon group having 1 to 15 carbon atoms and optionally containing an ether bond, specifically, an alkylene group or an alkylene group optionally containing an ether bond; and "p" independently represents 0 or 1.

As the linear perfluoropolyether compound as such component (A), the one represented by the following general formula (1) is particularly suitable, 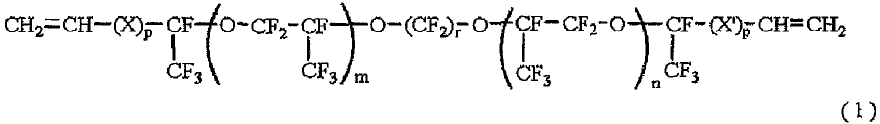 wherein X, X', and "p" are as defined above; "r" represents an integer of 2 to 6; "m" and "n" each represents an integer of 0 to 600, and a sum of "m" and "n" is 50 to 600.

The linear perfluoropolyether compound represented by the above general formula (1) preferably has a weight-average molecular weight of 3,000 to 100,000, particularly 4,000 to 50,000 in molecular weight distribution measurement in terms of polystyrene as determined by gel permeation chromatography (GPC) analysis using a fluorine solvent as an eluent. The weight-average molecular weight of 3,000 or more leads to reduced swelling in gasoline and other various types of solvents. Particularly, the swelling in gasoline becomes 6% or less, which enables a member required to be resistant to gasoline to have satisfactory properties. Additionally, the weight-average molecular weight of 100,000 or less is practical due to not so high viscosity and excellent workability. Note that a value of a degree of polymerization (m+n) of the linear perfluoropolyether compound of the above general formula (1) can be similarly determined, for example, as a number-average polymerization degree or weight-average polymerization degree in molecular weight distribution measurement in terms of polyethylene as determined by gel permeation chromatography (GPC) analysis using a fluorine solvent as an eluent. Incidentally, the number-average polymerization degree and a number-average molecular weight can also be calculated from a ratio of the terminal structures to the repeating unit structures obtained from a ¹⁹F-NMR spectrum.

Specific examples of the linear perfluoropolyether compound represented by the general formula (1) include those represented by the following formulae. 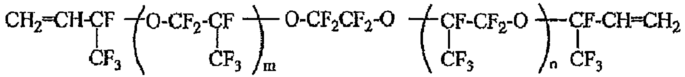 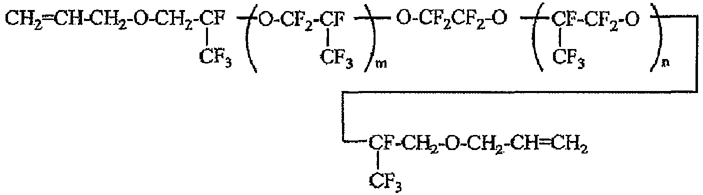 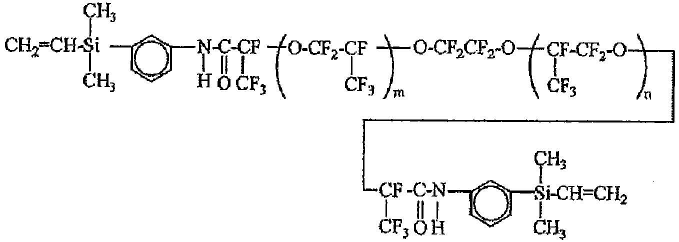 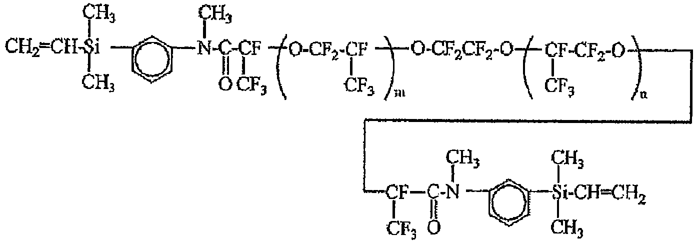 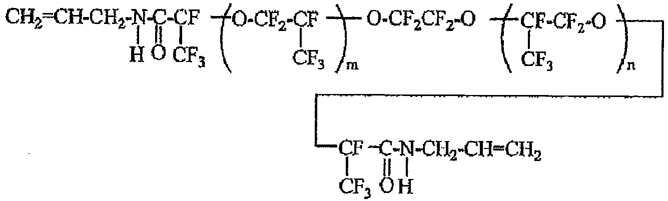 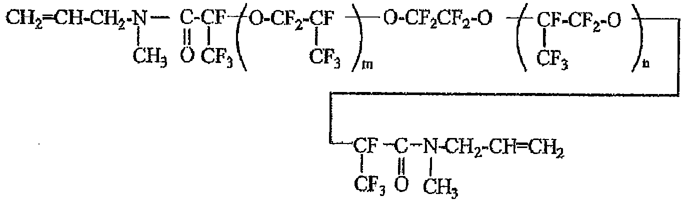 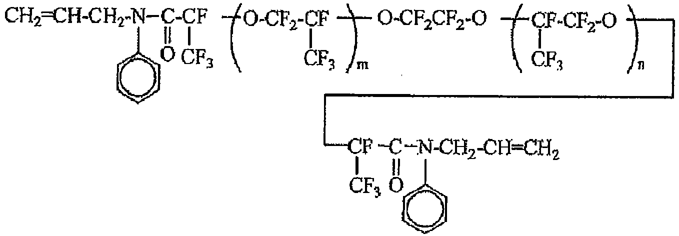 (In the formulae, "m" and "n" each represents an integer of 0 to 600, preferably an integer of 0 to 200, satisfying m+n=50 to 600, preferably m+n=50 to 200.)

Furthermore, in the present invention, to modify the linear perfluoropolyether compound of the above formula (1) to a desired wight-average molecular weight depending on its purpose, it is also possible to subject the linear perfluoropolyether compound as described above to hydrosilylation reaction in advance with an organosilicon compound containing two SiH groups in a molecule using an ordinary method and conditions, and use the resulting chain-extended product as the component (A). Note that the linear perfluoropolyether compound as the component (A) may be used alone or in combination of two or more kinds thereof.

### Component (B)

In the first aspect of the present invention, the component (B) acts as a crosslinking agent and/or a chain extender for the component (A). This component (B) is an organosilicon compound, such as organohydrogenpolysiloxane, having at least two, preferably three or more hydrogen atoms (hydrosilyl groups represented by SiH) each bonded to a silicon atom per molecule. Examples of such component (B) include, but are not limited to, known organosilicon compounds described in the above Patent Documents 1, 2, and 4.

Note that as the organosilicon compound as the component (B), a fluorine-containing organohydrogenpolysiloxane having one or more monovalent perfluoroalkyl groups, monovalent perfluorooxyalkyl groups, divalent perfluoroalkylene groups, and/or divalent perfluorooxyalkylene groups per molecule can suitably be used from the viewpoints of compatibility with the component (A), or the component (A) and a component (F) as described later in the second embodiment of the present invention as described later, dispersibility, uniformity of a rubber or gel cured material (pressure sensitive adhesive) after curing, etc.

Examples of this monovalent or divalent fluorine-containing organic group include perfluoroalkyl groups, perfluorooxyalkyl groups, perfluoroalkylene groups, and perfluorooxyalkylene groups represented by the following formulae, etc.

C_{g}F_{2g+1}-

-C_{g}F_{2g}-

(In the formulae, "g" represents an integer of 1 to 20, preferably an integer of 2 to 10.) 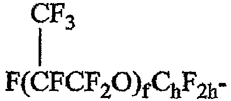 (In the formula, "f" represents an integer of 1 to 200, preferably an integer of 1 to 100; and "h" represents an integer of 1 to 3.) 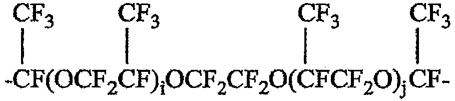 (In the formula, "i" and "j" each represents an integer of 1 or more, preferably an integer of 1 to 100, and i+j is 2 to 200, preferably 2 to 100 on average.)

- (CF₂O)_{d}-(CF₂CF₂O)ₑ-CF₂-

(In the formula, "d" and "e" each represents an integer of 1 to 50, preferably an integer of 1 to 40.)

Moreover, these perfluoroalkyl groups, perfluorooxyalkyl groups, perfluoroalkylene groups, or perfluorooxyalkylene groups are each preferably bonded to a silicon atom through a divalent linking group. The divalent linking group may be an alkylene group, an arylene group, or a combination thereof, or any of these groups having an intervening ether-bond oxygen atom, amide bond, carbonyl bond, ester bond, diorganosilylene group, or the like. Examples thereof include, but are not limited to, the following divalent linking groups each having 2 to 12 carbon atoms, etc.

-CH₂CH₂-,

-CH₂CH₂CH₂-,

-CH₂CH₂CH₂OCH₂-,

-CH₂CH₂CH₂-NH-CO-,

-CH₂CH₂CH₂-N(Ph)-CO-,

-CH₂CH₂CH₂-N(CH₃)-CO-,

-CH₂CH₂CH₂-N(CH₂CH₃)-CO-,

-CH₂CH₂-Si(CH₃)₂-Ph'-N(CH₃)-CO-,

-CH₂CH₂CH₂-Si(CH₃)₂-Ph'-N(CH₃)-CO-,

-CH₂CH₂CH₂-O-CO-,

wherein Ph represents a phenyl group, and Ph' represents a phenylene group.

Moreover, in the fluorine-containing organohydrogenpolysiloxane as this component (B), examples of a monovalent substituent bonded to a silicon atom, other than the above monovalent or divalent fluorine-containing organic groups and the hydrogen atoms each bonded to the silicon atom, include unsubstituted or substituted monovalent hydrocarbon groups having 1 to 20 carbon atoms, preferably 1 to 12 carbon atoms, including: alkyl groups such as methyl, ethyl, propyl, butyl, hexyl, cyclohexyl, octyl, and decyl groups; alkenyl groups such as vinyl and allyl groups; aryl groups such as phenyl, tolyl, and naphthyl groups; aralkyl groups such as benzyl and phenylethyl groups; and substituted forms of these groups, in which some or all of hydrogen atoms are substituted with chlorine atoms, cyano groups, or the like, for example, chloromethyl, chloropropyl, and cyanoethyl groups.

The fluorine-containing organohydrogenpolysiloxane as the component (B) may be any of cyclic, linear, branched, three-dimensional network, and a combination thereof. The number of silicon atoms in this fluorine-containing organohydrogenpolysiloxane is not particularly limited, but typically 2 to 60, preferably about 3 to 30.

Examples of the component (B) having such monovalent or divalent fluorine-containing organic group and the hydrogen atoms each bonded to the silicon atom include the following compounds. These compounds may be used alone or in combination of two or more kinds thereof. Note that in the following formulae, Me represents a methyl group and Ph represents a phenyl group.

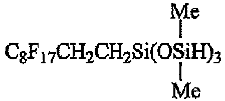

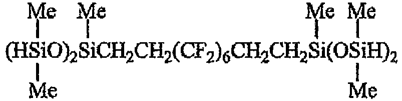

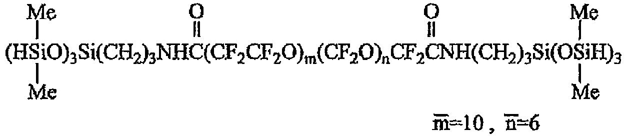

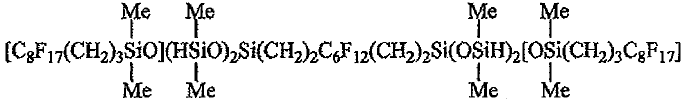

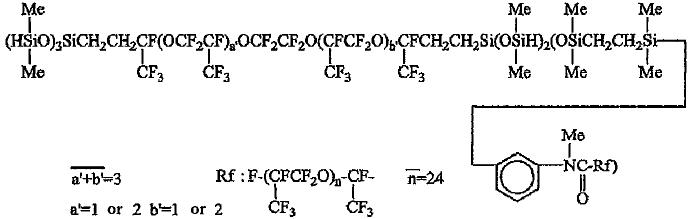

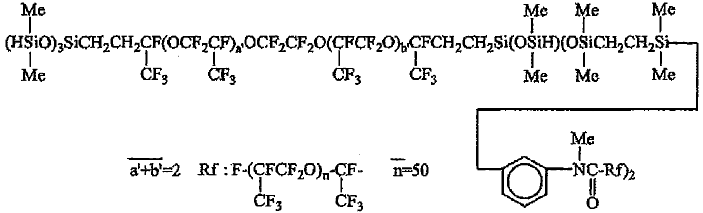

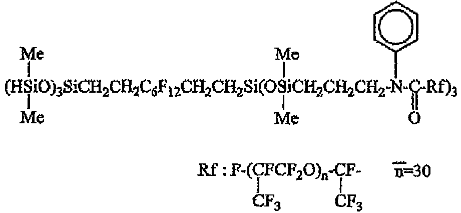

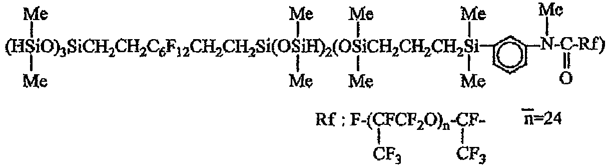

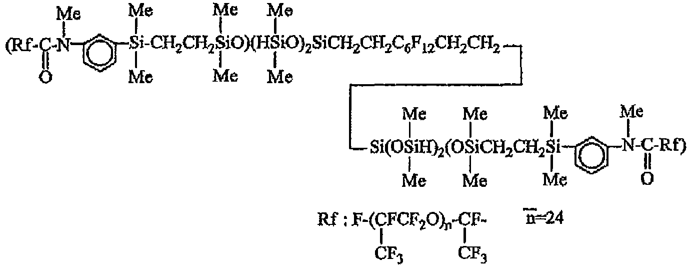

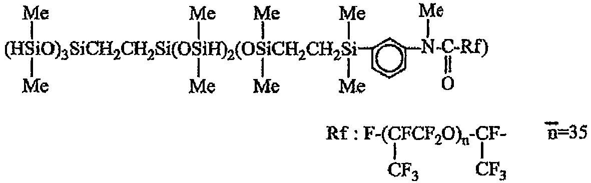

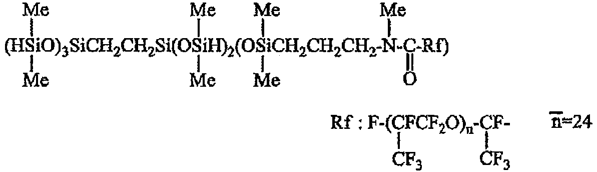

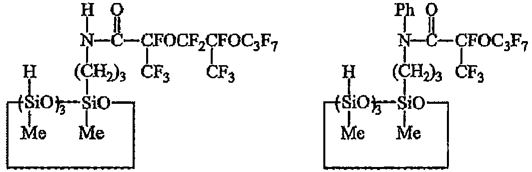

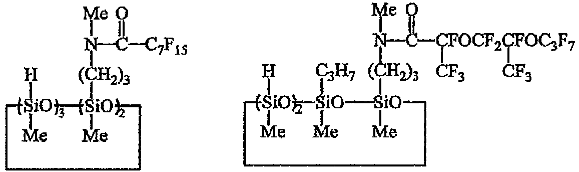

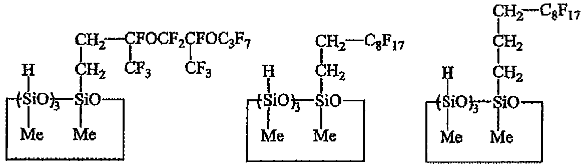

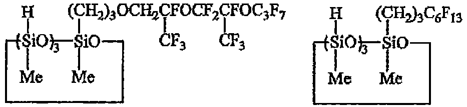

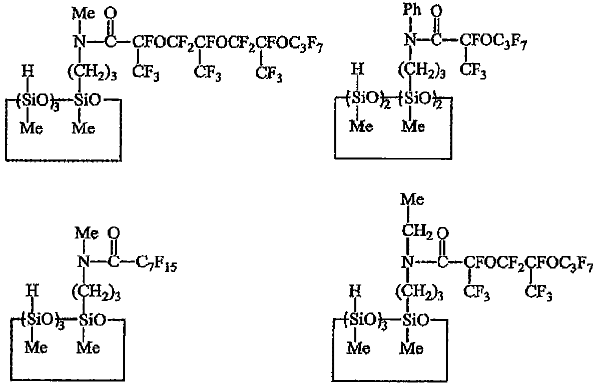

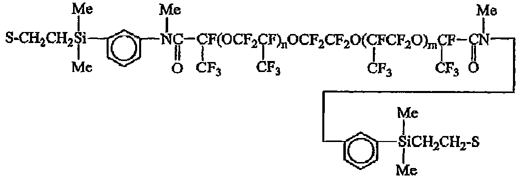

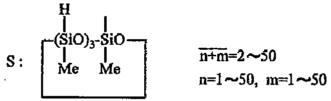

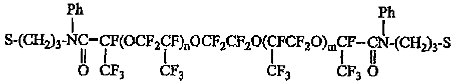

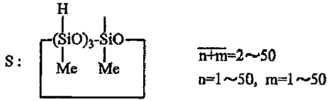

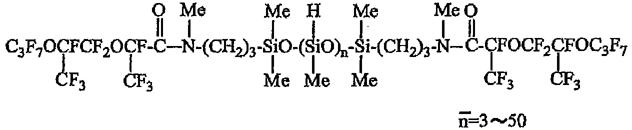

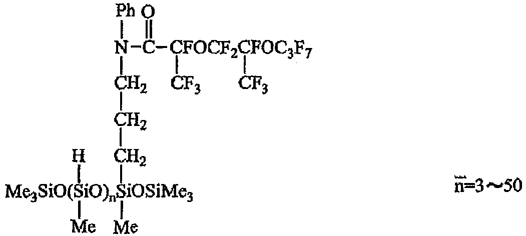

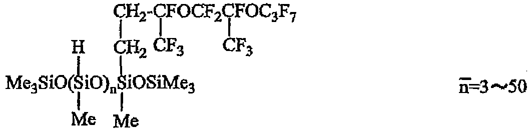

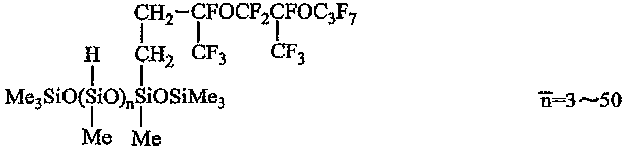

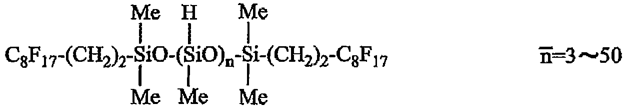

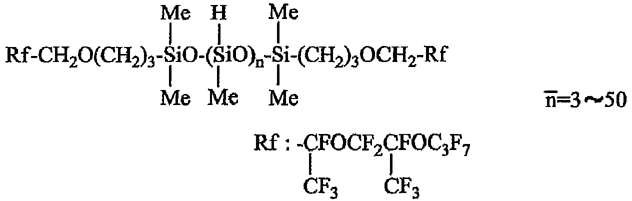

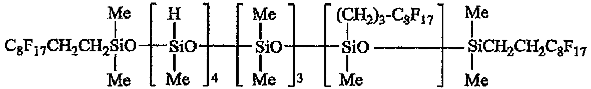

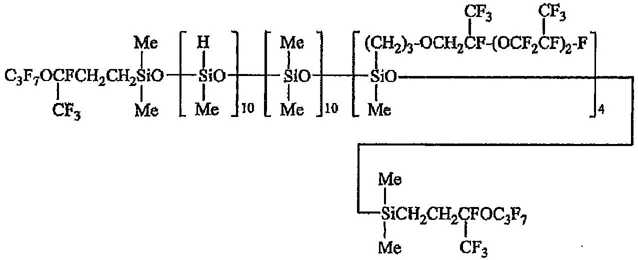

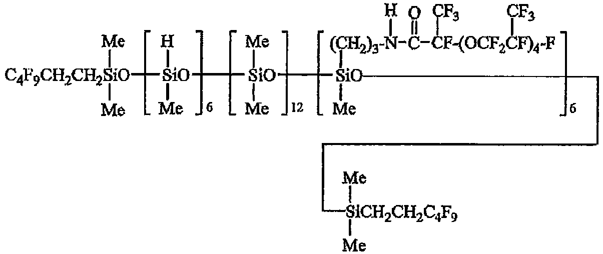

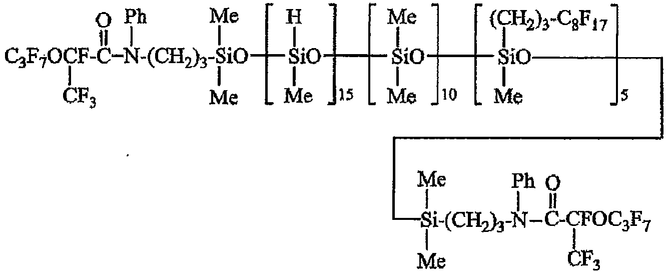

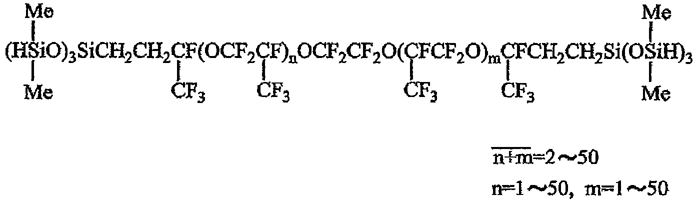

A blending amount of the above component (B) is an effective amount for curing the component (A) and the component (F) as described later, that is, an effective curing amount. In particular, the blending amount is an amount that enables an amount of the hydrosilyl groups (Si-H) in the component (B) to be preferably 0.2 to 4 mol, more preferably 0.5 to 3 mol, relative to 1 mol of the alkenyl groups contained in the above component (A) in the present composition, or relative to 1 mol of the alkenyl groups contained in the components (A) and (F) in total in the second embodiment of the present invention as described later. The blending amount that enables the amount of the hydrosilyl groups (Si-H) to be 0.2 mol or more leads to a sufficient crosslinking degree and ensures that a cured material can be obtained. Moreover, the blending amount that enables the amount of the hydrosilyl groups (Si-H) to be 4 mol or less has no risk of foaming during curing.

The component (B) can be used alone or in combination of two or more kinds thereof.

### Component (C)

In the first aspect of the present invention, the hydrosilylation reaction catalyst (addition reaction catalyst) as the component (C) is a catalyst that facilitates addition reaction between the alkenyl groups in the component (A), or in the second embodiment of the present invention as described later, the alkenyl groups in the component (A) and the component (F) as described later, and the hydrosilyl groups in the component (B). Since this hydrosilylation reaction catalyst is generally a noble metal (platinum group metal) compound and expensive, platinum or a platinum compound, which is relatively easy to obtain, is often used.

Examples of the platinum compound include chloroplatinic acid, complexes of chloroplatinic acid with olefin such as ethylene, complexes of chloroplatinic acid with vinyl siloxane, metallic platinum carried on silica, alumina, carbon, or the like, etc. As platinum group metal catalysts besides the platinum compounds, rhodium, ruthenium, iridium, and palladium compounds are also known, and examples thereof include RhCl(PPh₃)₃, RhCl(CO)(PPh₃)₂, Ru₃(CO)₁₂, IrCl(CO)(PPh₃)₂, Pd(PPh₃)₄, and the like.

A blending amount of the hydrosilylation reaction catalyst can be a catalytic amount, but generally, the hydrosilylation reaction catalyst is preferably blended in an amount of 0.1 to 500 ppm (by mass of the platinum group metal), more preferably 0.1 to 100 ppm, relative to a total mass of the components (A), (B), and (F). The hydrosilylation reaction catalyst as the component (C) can be used alone or in combination of two or more kinds thereof.

Note that the hydrosilylation reaction catalyst (addition reaction catalyst) as the component (C) of the present invention preferably contains no organic solvent (for example, the above platinum group metal catalysts not diluted, dissolved, or dispersed in an organic solvent).

### Component (D)

In the first aspect of the present invention, the antistatic agent as the component (D) is not particularly limited as long as it is conductive. Examples thereof include a conducting polymer, a surfactant, metal, metal oxide, a carbon material, and the like, which can be used alone or in combination of two or more thereof.

Among them, examples of the conducting polymer include polythiophene, polyaniline, polypyrrole, polyacetylene, PEDOT (poly-ethylenedioxythiophene), PEDOT/PSS, poly(p-phenylene), polyfluorene, polycarbazole, polysilane, or derivatives thereof, etc., which can be used alone or in combination of two or more thereof.

Moreover, examples of the surfactant include anionic surfactants, cationic surfactants, nonionic surfactants, zwitterionic surfactants, and the like.

Further, examples of the metal include gold, silver, copper or silver-coated copper, nickel, and the like. Metal powder thereof is preferably used.

Examples of the metal oxide include indium tin oxide (ITO), indium oxide (IO), indium zinc oxide (IZO), and the like. Metal oxide powder thereof is preferably used.

Moreover, examples of the carbon material include carbon black such as acetylene black and furnace black, carbon nanotube such as single-walled carbon nanotube and multi-walled carbon nanotube, carbon nanofiber, CN nanotube, CN nanofiber, BCN nanotube, BCN nanofiber, graphene, and the like.

Among them, preferred as a conductive material is carbon black, which has low temperature dependence of resistivity and high heat resistance and exhibits conductivity when added in a small amount.

A blending amount of the component (D) varies depending on its type, but preferably falls within a range of 0.5 to 20 parts by mass, more preferably 1 to 15 parts by mass relative to 100 parts by mass of the component (A), or in the second aspect of the present invention as described later, relative to 100 parts by mass of the components (A) and (F) in total as described later. The amount of 0.5 parts by mass or more can provide sufficient antistatic properties, whereas the amount of 20 parts by mass or less can prevent significant thickening of the composition.

Moreover, in a pressure sensitive adhesive and a pressure sensitive adhesive tape of the present invention as described later, a volume resistivity as measured on a surface of the pressure sensitive adhesive is preferably 1.0×10² to 1.0×10⁸ Ω·m, further preferably 1.0×10³ to 1.0×10⁷ Ω·m.

Note that in some cases, a surface resistivity may be required. In such a case, in the pressure sensitive adhesive and the pressure sensitive adhesive tape of the present invention, the surface resistivity as measured on the surface of the pressure sensitive adhesive is preferably 1.0×10³ to 1.0×10⁹ Ω/□, further preferably 1.0×10⁴ to 1.0×10⁸ Ω/□. Incidentally, in the present description, the volume resistivity and the surface resistivity are measurement values based on JIS K6911.

### Other Components

In the first aspect (or the second aspect as described later) of the present invention, various additives are optionally added in addition to the above components (A) to (C).

### Component (E)

In the first aspect (or the second aspect as described later) of the present invention, as a component (E), a regulator for the hydrosilylation reaction catalyst (addition reaction regulator) is optionally blended as necessary.

The component (E) can be added before thermal curing, for example, at the time of preparing the curable perfluoropolyether pressure sensitive adhesive composition, or at the time of applying the pressure sensitive adhesive composition onto a substrate, so as not to cause thickening or gelling of the pressure sensitive adhesive composition. Examples thereof include: acetylenic alcohols such as 1-ethynyl-1-hydroxycyclohexane, 3-methyl-1-butyn-3-ol, 3,5-dimethyl-1-hexyne-3-ol, 3-methyl-1-penten-3-ol, and phenyl butynol; 3-methyl-3-penten-1-yne, 3,5-dimethyl-3-hexen-1-yne, etc.; polymethylvinylsiloxane cyclic compounds, organophosphorus compounds, and the like. Addition thereof enables to properly maintain curing reactivity and storage stability. Note that the component (E) can be used alone or in combination of two or more kinds thereof.

A blending amount of the component (E) is in a range of 0 to 5 parts by mass, and if blended, preferably in a range of 0.01 to 5 parts by mass and more preferably in a range of 0.02 to 4 parts by mass, relative to 100 parts by mass of the component (A), or in the second aspect of the present invention as described later, relative to 100 parts by mass of the components (A) and (F) in total as described later. When the blending amount is 5 parts by mass or less, a curing property of the obtained composition will never be reduced.

### Component (G)

In the first aspect (or the second aspect as described later) of the present invention, as a component (G), hydrophobic silica powder is optionally blended as necessary. The hydrophobic silica powder as the component (G) provides a cured material obtained from the curable perfluoropolyether pressure sensitive adhesive composition with proper physical strength. Suitable as this hydrophobic silica powder as the component (G) is fine powder silica subjected to hydrophobic treatment, which is known as a filler for silicone rubber and has a BET specific surface area of 50 m²/g or more, particularly 50 to 400 m²/g.

Examples of the fine powder silica include aerosol silica (fumed silica or dry silica), precipitated silica (wet silica), colloidal silica, and the like, among which aerosol silica is the most preferable.

When the BET specific surface area is 50 m²/g or more, the cured material to be obtained will have sufficient physical strength. When the BET specific surface area is 400 m²/g or less, kneading process becomes easy and the component (G) itself disperses evenly. Incidentally, the BET specific surface area in the present invention can be measured based on DIN 66131.

Moreover, examples of a hydrophobizing agent for the above fine powder silica include organochlorosilane, organodisilazane, cyclic organopolysilazane, linear organopolysiloxane, and the like, among which organochlorosilane, organodisilazane, or cyclic organopolysilazane is preferred.

When the component (G) is blended with the composition of the present invention, a blending amount thereof is preferably 0.4 to 20 parts by mass, more preferably 0.5 to 18 parts by mass, relative to 100 parts by mass of the component (A) or 100 parts by mass of the components (A) and (F) in total as described later. The blending amount of 0.4 parts by mass or more ensures that a blending effect thereof can be obtained. On the other hand, the blending amount of 20 parts by mass or less causes no decrease in flowability of the composition, thereby a substrate is favorably coated.

### <Second Aspect>

The second aspect of the present invention is a curable perfluoropolyether pressure sensitive adhesive composition that provides a rubber cured material (perfluoropolyether rubber cured material) or a gel cured material (perfluoropolyether gel cured material), the composition including:
(A) a linear perfluoropolyether compound having at least two alkenyl groups per molecule and having a perfluoropolyether structure containing a repeating unit represented by -CₐF₂ₐO- in a main chain, wherein "a" represents an integer of 1 to 6: 100 to 40 parts by mass;
(F) a polyfluoromonoalkenyl compound having one alkenyl group per molecule and having a perfluoropolyether structure in a main chain: 0 to 60 parts by mass, provided that a total amount of the component (A) and the component (F) is 100 parts by mass;
(B) an organosilicon compound having at least two hydrogen atoms each bonded to a silicon atom per molecule: an effective curing amount;
(C) a hydrosilylation reaction catalyst: a catalytic amount; and
(D) an antistatic agent: an effective amount.

In the second aspect of the present invention, as the components (A) to (D), the same as those described above can be used.

### Component (F)

The component (F) is a component of the curable perfluoropolyether pressure sensitive adhesive composition of the present invention used in the specific second embodiment (i.e. the composition capable of providing the gel cured material), in contrast to the above-described first embodiment of the present invention (i.e. the composition capable of providing the rubber cured material). The component (F) is a polyfluoromonoalkenyl compound having one alkenyl group per molecule and having a perfluoropolyether structure in a main chain. In particular, a polyfluoromonoalkenyl compound represented by the following general formula (2) is preferable.

Rf¹-(X')ₚ-CH=CH₂ (2)

(In the formula, X' and "p" are as described above with regard to the general formula (1); and Rf¹ represents a perfluoropolyether structure (monovalent perfluoropolyether group) represented by the following general formula,

F-[CF(CF₃)CF₂O]_{w}-CF(CF₃)-

wherein "w" represents an integer of 1 to 500, preferably an integer of 2 to 200.)

Specific examples of the polyfluoromonoalkenyl compound represented by the above general formula (2) are described below, for example. 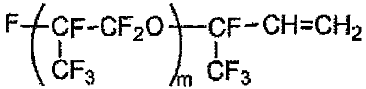 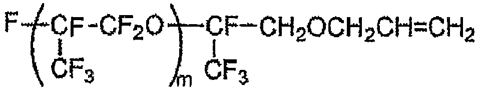 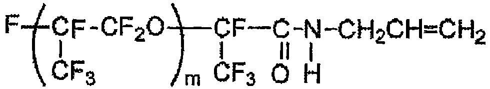 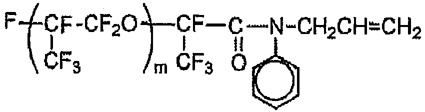 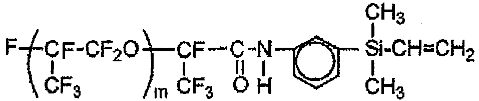 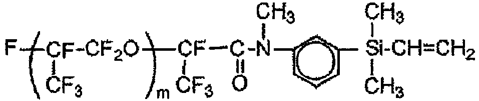 (In the above formulae, "m" represents an integer of 1 to 200, particularly an integer of 2 to 100.)

In a case of blending the polyfluoromonoalkenyl compound as the component (F), a blending amount thereof is selected such that the linear perfluoropolyether dialkenyl compound as the above component (A) and the component (F) in the curable perfluoropolyether pressure sensitive adhesive composition satisfy a ratio of the component (A): 100 to 40 parts by mass and the component (F): 0 to 60 parts by mass, where a total amount of the components (A) and (F) is 100 parts by mass.

For example, the perfluoropolyether pressure sensitive adhesive composition according to the second aspect of the present invention can contain the component (F) in an amount of 1 to 60 parts by mass, particularly 5 to 50 parts by mass, and further 8 to 40 parts by mass, relative to 99 to 40 parts by mass, particularly 95 to 50 parts by mass, and further 92 to 60 parts by mass of the component (A), provided that the components (A) and (F) are in a total amount of 100 parts by mass. Note that the polyfluoromonoalkenyl compound as the component (F) may be used alone or in combination of two or more kinds thereof.

### Other Components

In the second aspect of the present invention, in addition to the above-described components (A) to (D) and (F), various additives are optionally blended, similar to the first aspect. Examples of the regulator for the hydrosilylation reaction catalyst as the component (E) and the hydrophobic silica powder as the component (G) include the same as exemplified above.

### Cured Material

The perfluoropolyether pressure sensitive adhesive composition of the present invention, when cured, forms a pressure sensitive adhesive composed of a perfluoropolyether rubber or gel cured material having a surface adhesive strength of, for example, 0.001 to 10.0 N/25 mm, preferably 0.002 to 8.0 N/25 mm, and more preferably 0.003 to 6.0 N/25 mm. The perfluoropolyether pressure sensitive adhesive composition of the present invention can form a cured material (pressure sensitive adhesive) excellent in heat resistance, water repellency, oil repellency, weather resistance, chemical resistance, solvent resistance, etc. as well as antistatic performance, and can be used for various applications.

For example, in the first embodiment of the present invention, the cured material can be formed by curing the perfluoropolyether pressure sensitive adhesive composition, after adding: the component (B) in the amount that enables the amount of the hydrosilyl groups in the component (B) to be 0.2 to 3.0 mol per mol of the total alkenyl groups in the component (A), relative to 100 parts by mass of the component (A); the component (C) in the amount of 0.1 to 100 ppm in platinum equivalent relative to the total amount of the components (A) and (B); and the component (D) in the amount of 0.5 to 20 parts by mass relative to 100 parts by mass of the component (A).

Moreover, for example, in the second embodiment of the present invention, the cured material can be formed by curing the perfluoropolyether pressure sensitive adhesive composition, after adding: the component (F) in the amount of 20 to 60 parts by mass relative to 40 to 80 parts by mass of the component (A), the components (A) and (F) being in the amount of 100 parts by mass in total; the component (B) in the amount that enables the amount of the hydrosilyl groups in the component (B) to be 0.2 to 3.0 mol per mol of the total alkenyl groups contained in the components (A) and (F); the component (C) in the amount of 0.1 to 100 ppm in platinum equivalent relative to the total amount of the components (A), (B), and (F); and the component (D) in the amount of 0.5 to 20 parts by mass relative to 100 parts by mass of the components (A) and (F) in total.

The above-described cured material of the perfluoropolyether pressure sensitive adhesive composition is formed by any conventional known method, such as coating the respective compositions of the present invention on an appropriate substrate followed by curing, or bonding. The curing can be easily performed by heat treatment at a temperature of typically 60 to 150°C for about 1 to 60 minutes.

A pressure sensitive adhesive utilizing the cured material of the perfluoropolyether pressure sensitive adhesive composition of the present invention can be used as members for automobiles, chemical plants, semiconductor manufacturing lines, analytical physics and chemistry instruments, medical equipment, aircrafts, optics, etc.

Additionally, for example, a pressure sensitive adhesive tape formed by laminating a cured material (perfluoropolyether rubber cured material or perfluoropolyether gel cured material) layer of the curable perfluoropolyether pressure sensitive adhesive composition of the present invention on a substrate made of an organic resin film such as polyethylene terephthalate (PET) film has excellent heat resistance, oil resistance, low-temperature properties, moisture resistance, low gas permeability, etc., and is particularly useful as a pressure sensitive adhesive tape having a conductive pressure sensitive adhesive layer with excellent chemical resistance and solvent resistance.

Additionally, in a case of coating the pressure sensitive adhesive composition of the present invention, it is advantageous to use a known primer in combination to improve the bond or adhesion to the substrate. The primer enables to prevent penetration of chemicals and solvents through the substrate interface, and improve acid resistance, chemical resistance, and solvent resistance of the entire components.

The usable primer includes silane primers based on silane coupling agents, organohydrogen polysiloxane-based primers, synthetic rubber-based primers, acrylic resin-based primers, urethane resin-based primers, epoxy resin-based primers, and a composition obtained by adding a tackifier to the perfluoropolyether rubber composition of the present invention.

Such perfluoropolyether pressure sensitive adhesive composition of the present invention can provide a cured material (pressure sensitive adhesive) that has excellent heat resistance, weather resistance, oil resistance, low-temperature properties, moisture resistance, low gas permeability, water repellency, oil repellency, etc., the cured material (pressure sensitive adhesive) particularly being capable of preventing static charge during peeling off an adherend attached to the pressure sensitive adhesive or a pressure sensitive adhesive-backed tape.

Moreover, a third aspect of the present invention is a pressure sensitive adhesive including the cured material of the curable perfluoropolyether pressure sensitive adhesive composition (the perfluoropolyether rubber cured material or the perfluoropolyether gel cured material) of the present invention as previously described.

As previously described, the perfluoropolyether pressure sensitive adhesive composition of the present invention provides a cured material (pressure sensitive adhesive) having excellent heat resistance, weather resistance, oil resistance, chemical resistance, solvent resistance (resistance to solvating media), low-temperature properties, moisture resistance, low gas permeability, water repellency, oil repellency, etc., and further yields a coating film capable of preventing static charge during peeling off an adherend attached to the pressure sensitive adhesive or a pressure sensitive adhesive-backed tape. Accordingly, the pressure sensitive adhesive of the present invention has excellent heat resistance, weather resistance, oil resistance, chemical resistance, solvent resistance (resistance to solvating media), low-temperature properties, moisture resistance, low gas permeability, water repellency, oil repellency, etc., and can be used as a coating film capable of preventing static charge during peeling off an adherend attached to the pressure sensitive adhesive or a pressure sensitive adhesive-backed tape.

Furthermore, a fourth aspect of the present invention is a pressure sensitive adhesive tape in which the cured material layer of the curable perfluoropolyether pressure sensitive adhesive composition of the present invention as previously described is laminated.

As previously described, the perfluoropolyether pressure sensitive adhesive composition of the present invention provides a cured material (pressure sensitive adhesive) having excellent heat resistance, weather resistance, oil resistance, chemical resistance, solvent resistance (resistance to solvating media), low-temperature properties, moisture resistance, low gas permeability, water repellency, oil repellency, etc., and further yields a coating film capable of preventing static charge during peeling off an adherend attached to the pressure sensitive adhesive or a pressure sensitive adhesive-backed tape. Accordingly, the pressure sensitive adhesive tape of the present invention has excellent heat resistance, weather resistance, oil resistance, chemical resistance, solvent resistance (resistance to solvating media), low-temperature properties, moisture resistance, low gas permeability, water repellency, oil repellency, etc., and further can be used as a coating film capable of preventing static charge during peeling off an adherend attached to the pressure sensitive adhesive or a pressure sensitive adhesive-backed tape.

Moreover, to enhance the effect of surface modification, the substrate surface can be subjected to degreasing treatment with an organic solvent or the like, prebaking, etc. prior to plasma irradiation.

### EXAMPLE

Hereinafter, the present invention will be specifically described with reference to Examples and Comparative Examples. However, the present invention is not limited to Examples below. Incidentally, "%" indicates mass% in the following examples.

### Examples 1 to 4, Comparative Examples 1 to 4

The following raw materials were used to prepare curable perfluoropolyether pressure sensitive adhesive compositions shown in Table 1. These pressure sensitive adhesive compositions were cured under curing conditions of 130°C for 5 minutes. A surface adhesive strength of each cured material was measured, and a solvent resistance test and volume resistivity measurement were performed in the following manner. The results are together shown in Table 1.

### Raw Materials

### (A) Linear perfluoropolyether compound

### (a-1) Bifunctional perfluoropolyether (perfluoropolyether 1)

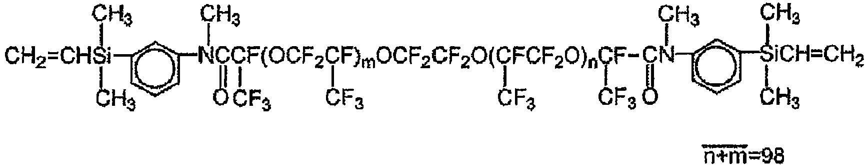

### (a-2) Bifunctional perfluoropolyether (perfluoropolyether 2)

CH₂=CH-CH₂-O-CH₂-Rf-CH₂-O-CH₂-CH=CH₂

(Rf: -CF₂O(CF₂CF₂O)_{20.8}(CF₂O)_{22.1}CF₂-,
provided that the repeating units CF₂CF₂O and CF₂O are randomly arranged.)

### (B) Organohydrogenpolysiloxane

### (b-1) Organohydrogensiloxane 1

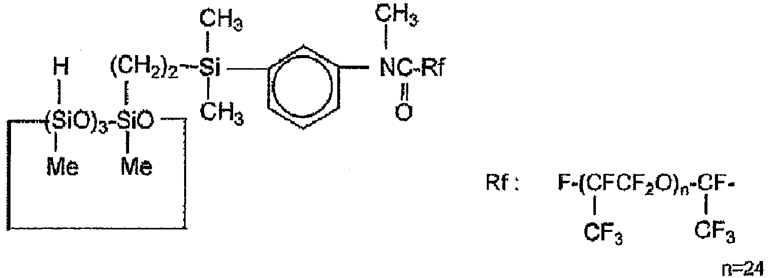

### (b-2) Organohydrogensiloxane 2

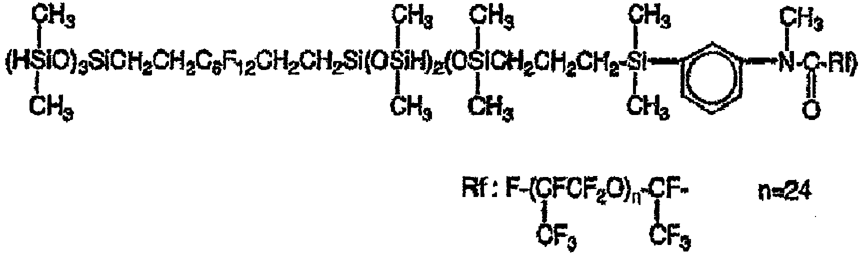

### (C) Addition reaction catalyst (platinum compound)

CAT-PL-56 (product name produced by Shin-Etsu Chemical Co., Ltd.)

### (D) Antistatic agent

(d-1) DENKA BLACK Li-100 (acetylene black produced by Denka Company Limited, antistatic agent 1)
(d-2) ENSACO260G (conductive carbon black dispersion produced by IMERYS, antistatic agent 2)
(D) Antistatic agent (added as the following base compounds d-1, d-2, and d-3)

### Preparation of Base Compound d-1

A planetary mixer was charged with 100 parts of the polymer represented by the above formula (a-1), and 12 parts of DENKA BLACK Li-100 (produced by Denka Company Limited) was added in divided portions. Thereafter, with the internal temperature kept at 100 to 130°C, heat treatment was performed for 1 hour under reduced pressure (gauge pressure; -0.093 MPa). Next, the content was cooled to 40°C or lower and then taken out, and passed through a three roll mill one time, thereby obtaining the base compound d-1 (base compound 1).

### Preparation of Base Compound d-2

A planetary mixer was charged with 100 parts of the polymer represented by the above formula (a-1), and 15 parts of ENSACO260G (produced by IMERYS) was added in divided portions. Thereafter, with the internal temperature kept at 100 to 130°C, heat treatment was performed for 1 hour under reduced pressure (gauge pressure; -0.093 MPa). Next, the content was cooled to 40°C or lower and then taken out, and passed through a three roll mill one time, thereby obtaining the base compound d-2 (base compound 2).

### Preparation of Base Compound d-3

A planetary mixer was charged with 100 parts of the polymer represented by the above formula (a-2), and 12 parts of DENKA BLACK Li-100 (produced by Denka Company Limited) was added in divided portions. Thereafter, with the internal temperature kept at 100 to 130°C, heat treatment was performed for 1 hour under reduced pressure (gauge pressure; -0.093 MPa). Next, the content was cooled to 40°C or lower and then taken out, and passed through a three roll mill one time, thereby obtaining the base compound d-3 (base compound 3).

### (F) Monofunctional perfluoropolyether compound (perfluoropolyether 3)

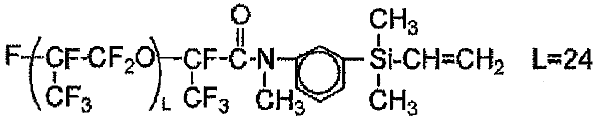

### (E) Curing regulator: ethynylcyclohexanol

### Adhesive Strength Measurement

Each of the compositions of Examples and Comparative Examples was applied onto a PET (polyethylene terephthalate) film having a thickness of 50 µm and a width of 25 mm using an applicator such that the composition was 30 µm thick. Thereafter, the composition was heated at 130°C for 5 minutes to cure into a rubber or gel form, thereby fabricating a pressure sensitive adhesive tape in which a pressure sensitive adhesive layer (rubber or gel cured material layer) with a thickness of 30 µm was laminated on the PET film having the thickness of 50 µm. This pressure sensitive adhesive tape was attached to a metal plate (polished stainless steel plate), and the pressure sensitive adhesive tape was pressure-bonded by reciprocating one time a 2 Kg roller covered with a rubber layer on the tape substrate. After standing for 20 hours at room temperature, a tensile tester was used at 25°C to measure a force (N/25 mm) required to peel off the pressure sensitive adhesive tape from the stainless steel plate at a tensile rate of 300 mm/minute and an angle of 180°, as an adhesive strength of each pressure sensitive adhesive layer (rubber or gel cured material layer).

### Solvent Resistance Test (Weight Change)

In a 32 φ×15 mm glass container, 3 g of the respective compositions of Examples and Comparative Examples was filled, and then cured at 130°C for 5 minutes to produce a sample. The sample was immersed in xylene at 25°C for 7 days and a weight change rate before and after the immersion was measured.

### Volume Resistivity Measurement

Each of the compositions of Examples and Comparative Examples was applied onto a stainless steel plate (thickness: 0.5 mm) using an applicator such that the composition was 30 µm thick, and then heated at 130°C for 5 minutes to cure into a rubber or gel form. Next, between a ring probe (produced by Mitsubishi Chemical Corporation, product name: URS probe) and a measurement stage (produced by Mitsubishi Chemical Corporation, product name: Resitable UFL), the stainless steel plate, on which each of the compositions of Examples and Comparative Examples was cured, was placed to bring the stainless steel plate into contact with the measurement stage. The ring probe was pressed against the pressure sensitive adhesive side while a voltage of 100 V was being applied between an inner electrode of the probe and the measurement stage, and a volume resistivity was measured using a resistivity meter (produced by Mitsubishi Chemical Corporation, product name: Hiresta UX).

**[Table 1]**

| Component (parts by mass) | | Examples | | | | Comparative Examples | | | |
|---|---|---|---|---|---|---|---|---|---|
| | | 1 | 2 | 3 | 4 | 1 | 2 | 3 | 4 |
| a-1 | Perfluoro polyether 1 | 10.2 | 10.5 | 37.5 | | 10.2 | 10.2 | 90.5 | 100 |
| a-2 | Perfluoro polyether 2 | | | | 37.5 | | | | |
| F | Perfluoro polyether 3 | 23.1 | 9.5 | | | 23.1 | 23.1 | 9.5 | |
| d-1 | Base compound 1 | 74.7 | | 70 | | 74.7 | 74.7 | | |
| d-2 | Base compound 2 | | 92 | | | | | | |
| d-3 | Base compound 3 | | | | 70 | | | | |
| Components A+F/Component D (parts by mass ratio) | | 100/ 8 | 100/ 12 | 100/ 7.5 | 100/ 7.5 | 100/8 | 100/8 | 100/ 0 | 100/ 0 |
| b-1 | Organohydrogen siloxane 1 | 24.3 | 21.6 | | | | 22.9 | 22.9 | |
| b-2 | Organohydrogen siloxane 2 | | | 18.1 | 74.3 | | | | 18.1 |
| C | Platinum compound | 0.25 | 0.24 | 0.24 | 0.35 | 0.24 | | 0.24 | 0.24 |
| E | Curing regulator | 0.02 | 0.02 | 0.02 | 0.03 | 0.02 | 0.02 | 0.02 | 0.02 |
| Adhesive strength (N/25 mm) | | 2.2 | 0.78 | 0.12 | 0.09 | Not cured | Not cured | 0.66 | 0.06 |
| Solvent resistance (%) Xylene | | 2.8 | 3.2 | 1.8 | 1.6 | | | 3.1 | 1.2 |
| Volume resistivity (Ω·m) | | 6.0× 10⁵ | 2.2× 10³ | 3.4× 10⁴ | 5.8x 10⁴ | | | 7.0× 10¹³ | 2.3x 10¹² |

As shown in Table 1, it was confirmed that the pressure sensitive adhesives of Examples 1 to 4 each using the curable perfluoropolyether pressure sensitive adhesive composition of the present invention not only had the favorable adhesive strength and solvent resistance, but also had conductivity according to the volume resistivity after cured. In contrast, it was confirmed that Comparative Examples 1 and 2 not containing the component (B) or (C) as the essential component of the present invention did not cure, and Comparative Examples 3 to 4 not containing the component (D) had the high volume resistivity and were nonconductive.

Accordingly, it was confirmed that the present invention can provide a curable perfluoropolyether pressure sensitive adhesive composition having excellent heat resistance, weather resistance, water repellency, oil repellency, chemical resistance, and solvent resistance, and particularly capable of preventing static charge during peeling off an adherend attached to a pressure sensitive adhesive or a pressure sensitive adhesive-backed tape.

The present description includes the following embodiments.

[1]: A curable perfluoropolyether pressure sensitive adhesive composition comprising: (A) a linear perfluoropolyether compound having at least two alkenyl groups per molecule and having a perfluoropolyether structure containing a repeating unit represented by - CₐF₂ₐO- in a main chain, wherein "a" represents an integer of 1 to 6: 100 parts by mass; (B) an organosilicon compound having at least two hydrogen atoms each bonded to a silicon atom per molecule: an effective curing amount; (C) a hydrosilylation reaction catalyst: a catalytic amount; and (D) an antistatic agent: an effective amount.
[2]: The curable perfluoropolyether pressure sensitive adhesive composition according to [1], wherein the component (A) is a linear perfluoropolyether compound represented by the following general formula (1), 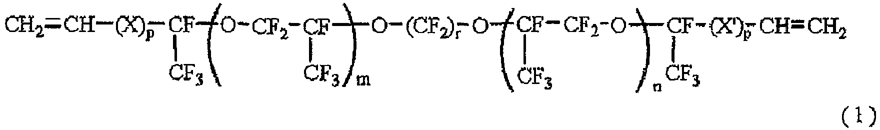 wherein X represents -CH₂-, -CH₂O-, -CH₂OCH₂-, or - Y-NR¹-CO-, provided that Y represents -CH₂- or a group represented by the following structural formula (Z), and R¹ represents a hydrogen atom, a methyl group, a phenyl group, or an allyl group; X' represents -CH₂-, -OCH₂-, - CH₂OCH₂-, or -CO-NR²-Y'-, provided that Y' represents - CH₂- or a group represented by the following structural formula (Z'), and R² represents a hydrogen atom, a methyl group, a phenyl group, or an allyl group; "p" independently represents 0 or 1; "r" represents an integer of 2 to 6; "m" and "n" each represents an integer of 0 to 600, and a sum of "m" and "n" is 50 to 600. 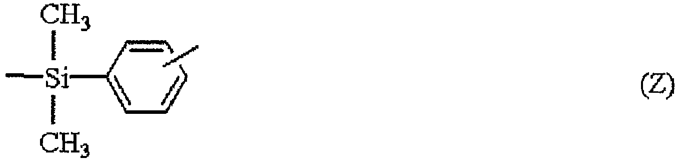 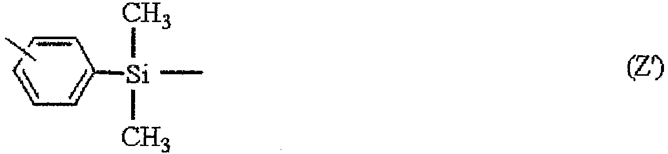
[3]: The curable perfluoropolyether pressure sensitive adhesive composition according to [1] or [2], wherein the antistatic agent as the component (D) is at least one selected from a conducting polymer, a surfactant, metal, metal oxide, and a carbon material.
[4]: The curable perfluoropolyether pressure sensitive adhesive composition according to [1], [2], or [3], further comprising (E) an addition reaction regulator in an amount of 0.01 to 5 parts by mass relative to 100 parts by mass of the component (A).
[5]: The curable perfluoropolyether pressure sensitive adhesive composition according to [1], [2], [3], or [4], capable of providing a cured material having a volume resistivity of 1.0×10² to 1.0×10⁸ Ω·m.
[6]: The curable perfluoropolyether pressure sensitive adhesive composition according to [1], [2], [3], [4], or [5], capable of curing to form a pressure sensitive adhesive having an adhesive strength of 0.001 N/25 mm to 10.0 N/25 mm.
[7]: A curable perfluoropolyether pressure sensitive adhesive composition comprising: (A) a linear perfluoropolyether compound having at least two alkenyl groups per molecule and having a perfluoropolyether structure containing a repeating unit represented by - CₐF₂ₐO- in a main chain, wherein "a" represents an integer of 1 to 6: 100 to 40 parts by mass; (F) a polyfluoromonoalkenyl compound having one alkenyl group per molecule and having a perfluoropolyether structure in a main chain: 0 to 60 parts by mass, provided that a total amount of the component (A) and the component (F) is 100 parts by mass; (B) an organosilicon compound having at least two hydrogen atoms each bonded to a silicon atom per molecule: an effective curing amount; (C) a hydrosilylation reaction catalyst: a catalytic amount; and (D) an antistatic agent: an effective amount.
[8]: The curable perfluoropolyether pressure sensitive adhesive composition according to [7], wherein the component (A) is a linear perfluoropolyether compound represented by the following general formula (1), 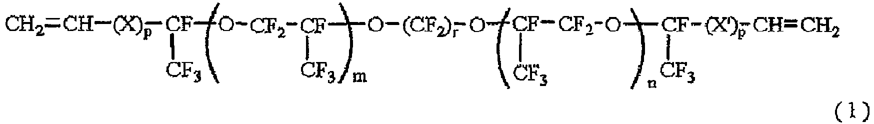 wherein X represents -CH₂-, -CH₂O-, -CH₂OCH₂-, or - Y-NR¹-CO-, provided that Y represents -CH₂- or a group represented by the following structural formula (Z), and R¹ represents a hydrogen atom, a methyl group, a phenyl group, or an allyl group; X' represents -CH₂-, -OCH₂-, - CH₂OCH₂-, or -CO-NR²-Y'-, provided that Y' represents - CH₂- or a group represented by the following structural formula (Z'), and R² represents a hydrogen atom, a methyl group, a phenyl group, or an allyl group; "p" independently represents 0 or 1; "r" represents an integer of 2 to 6; "m" and "n" each represents an integer of 0 to 600, and a sum of "m" and "n" is 50 to 600. 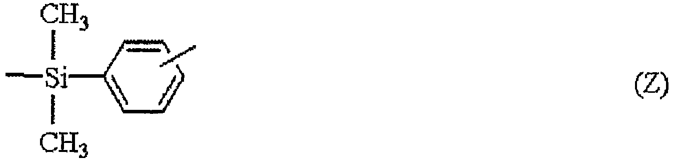 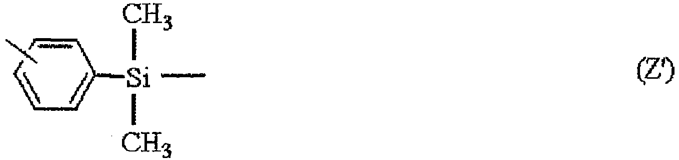
[9]: The curable perfluoropolyether pressure sensitive adhesive composition according to [7] or [8], wherein the component (F) is a polyfluoromonoalkenyl compound represented by the following general formula (2), Rf¹-(X')ₚ-CH=CH₂ (2)
   wherein X' represents -CH₂-, -OCH₂-, -CH₂OCH₂-, or - CO-NR²-Y'-, provided that Y' represents -CH₂- or a group represented by the following structural formula (Z'), 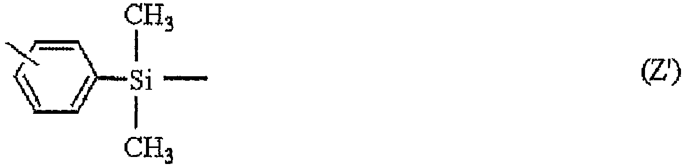 and R² represents a hydrogen atom, a methyl group, a phenyl group, or an allyl group; "p" represents 0 or 1; and Rf¹ represents a perfluoropolyether structure represented by a general formula, F-[CF(CF₃)CF₂O]_{w}-CF(CF₃)-, wherein "w" represents an integer of 1 to 500.
[10]: The curable perfluoropolyether pressure sensitive adhesive composition according to [7], [8], or [9], wherein the antistatic agent as the component (D) is at least one selected from a conducting polymer, a surfactant, metal, metal oxide, and a carbon material.
[11]: The curable perfluoropolyether pressure sensitive adhesive composition according to [7], [8], [9], or [10], further comprising (E) an addition reaction regulator in an amount of 0.01 to 5 parts by mass relative to 100 parts by mass of the component (A) and the component (F) in total.
[12]: The curable perfluoropolyether pressure sensitive adhesive composition according to [7], [8], [9], [10], or [11], capable of providing a cured material having a volume resistivity of 1.0×10² to 1.0×10⁸ Ω·m.
[13]: The curable perfluoropolyether pressure sensitive adhesive composition according to [7], [8], [9], [10], [11], or [12], capable of curing to form a pressure sensitive adhesive having an adhesive strength of 0.001 N/25 mm to 10.0 N/25 mm.
[14]: A pressure sensitive adhesive comprising a cured material of the curable perfluoropolyether pressure sensitive adhesive composition according to [1], [2], [3], [4], [5], [6], [7], [8], [9], [10], [11], [12], or [13].
[15]: A pressure sensitive adhesive tape comprising a cured material layer of the curable perfluoropolyether pressure sensitive adhesive composition according to [1], [2], [3], [4], [5], [6], [7], [8], [9], [10], [11], [12], or [13] laminated on a substrate.

Furthermore, the present invention is described as the following <1> to <15> from a different perspective.
<1> A curable perfluoropolyether pressure sensitive adhesive composition including:
   (A) a linear perfluoropolyether compound having at least two alkenyl groups per molecule and having a perfluoropolyether structure containing a repeating unit represented by -CₐF₂ₐO- in a main chain, wherein "a" represents an integer of 1 to 6;
   (B) an organosilicon compound having at least two hydrogen atoms each bonded to a silicon atom per molecule;
   (C) a hydrosilylation reaction catalyst; and
   (D) an antistatic agent.
<2> The curable perfluoropolyether pressure sensitive adhesive composition according to <1>, wherein the component (A) is a linear perfluoropolyether compound represented by the following general formula (1), 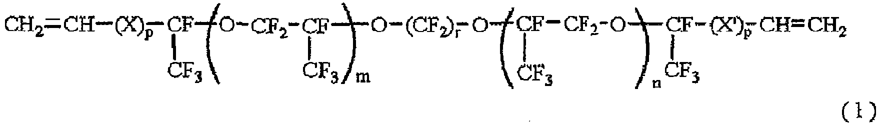 wherein X represents -CH₂-, -CH₂O-, -CH₂OCH₂-, or - Y-NR¹-CO-, provided that Y represents -CH₂- or a group represented by the following structural formula (Z), and R¹ represents a hydrogen atom, a methyl group, a phenyl group, or an allyl group; X' represents -CH₂-, -OCH₂-, - CH₂OCH₂-, or -CO-NR²-Y'-, provided that Y' represents - CH₂- or a group represented by the following structural formula (Z'), and R² represents a hydrogen atom, a methyl group, a phenyl group, or an allyl group; "p" independently represents 0 or 1; "r" represents an integer of 2 to 6; "m" and "n" each represents an integer of 0 to 600, and a sum of "m" and "n" is 50 to 600. 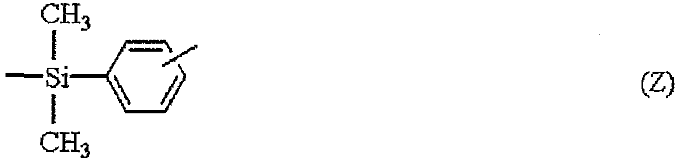 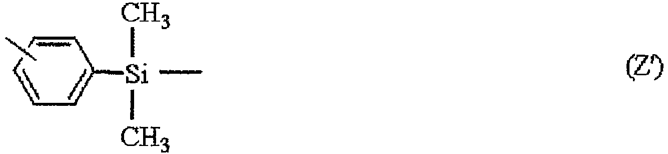
<3> The curable perfluoropolyether pressure sensitive adhesive composition according to <1>, wherein the antistatic agent as the component (D) is at least one selected from a conducting polymer, a surfactant, metal, metal oxide, and a carbon material.
<4> The curable perfluoropolyether pressure sensitive adhesive composition according to <1>, further including (E) an addition reaction regulator.
<5> The curable perfluoropolyether pressure sensitive adhesive composition according to <1>, capable of providing a cured material having a volume resistivity of 1.0×10² to 1.0×10⁸ Ω·m.
<6> The curable perfluoropolyether pressure sensitive adhesive composition according to <1>, capable of forming a pressure sensitive adhesive having an adhesive strength of 0.001 N/25 mm to 10.0 N/25 mm.
<7> A curable perfluoropolyether pressure sensitive adhesive composition including:
   (A) a linear perfluoropolyether compound having at least two alkenyl groups per molecule and having a perfluoropolyether structure containing a repeating unit represented by -CₐF₂ₐO- in a main chain, wherein "a" represents an integer of 1 to 6;
   (F) a polyfluoromonoalkenyl compound having one alkenyl group per molecule and having a perfluoropolyether structure in a main chain;
   (B) an organosilicon compound having at least two hydrogen atoms each bonded to a silicon atom per molecule;
   (C) a hydrosilylation reaction catalyst; and
   (D) an antistatic agent.
<8> The curable perfluoropolyether pressure sensitive adhesive composition according to <7>, wherein the component (A) is a linear perfluoropolyether compound represented by the following general formula (1), 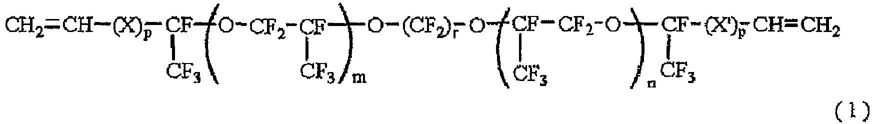 wherein X represents -CH₂-, -CH₂O-, -CH₂OCH₂-, or - Y-NR¹-CO-, provided that Y represents -CH₂- or a group represented by the following structural formula (Z), and R¹ represents a hydrogen atom, a methyl group, a phenyl group, or an allyl group; X' represents -CH₂-, -OCH₂-, - CH₂OCH₂-, or -CO-NR²-Y'-, provided that Y' represents - CH₂- or a group represented by the following structural formula (Z'), and R² represents a hydrogen atom, a methyl group, a phenyl group, or an allyl group; "p" independently represents 0 or 1; "r" represents an integer of 2 to 6; "m" and "n" each represents an integer of 0 to 600, and a sum of "m" and "n" is 50 to 600. 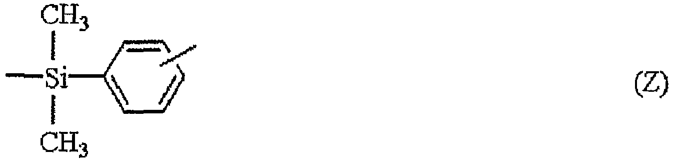 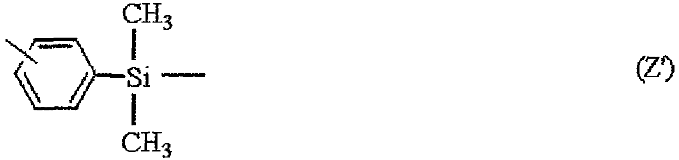
<9> The curable perfluoropolyether pressure sensitive adhesive composition according to <7>, wherein the component (F) is a polyfluoromonoalkenyl compound represented by the following general formula (2), Rf¹-(X')ₚ-CH=CH₂ (2)
   wherein X' represents -CH₂-, -OCH₂-, -CH₂OCH₂-, or - CO-NR²-Y'-, provided that Y' represents -CH₂- or a group represented by the following structural formula (Z'), 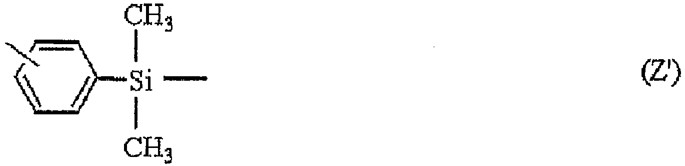 and R² represents a hydrogen atom, a methyl group, a phenyl group, or an allyl group; "p" represents 0 or 1; and Rf¹ represents a perfluoropolyether structure represented by a general formula, F-[CF(CF₃)CF₂O]_{w}-CF(CF₃)-, wherein "w" represents an integer of 1 to 500.
<10> The curable perfluoropolyether pressure sensitive adhesive composition according to <7>, wherein the antistatic agent as the component (D) is at least one selected from a conducting polymer, a surfactant, metal, metal oxide, and a carbon material.
<11> The curable perfluoropolyether pressure sensitive adhesive composition according to <7>, further including (E) an addition reaction regulator.
<12> The curable perfluoropolyether pressure sensitive adhesive composition according to <7>, capable of providing a cured material having a volume resistivity of 1.0×10² to 1.0×10⁸ Ω·m.
<13> The curable perfluoropolyether pressure sensitive adhesive composition according to <7>, capable of forming a pressure sensitive adhesive having an adhesive strength of 0.001 N/25 mm to 10.0 N/25 mm.
<14> A pressure sensitive adhesive including a cured material of the curable perfluoropolyether pressure sensitive adhesive composition according to any one of <1> to <13>.
<15> A pressure sensitive adhesive tape including a cured material layer of the curable perfluoropolyether pressure sensitive adhesive composition according to any one of <1> to <13> laminated on a substrate.

In the above <1> to <15>, changing the blending ratio of each component may change the balance of each property. In such a case, some properties will become unstable or deteriorate. However, the required properties vary depending on the intended use, and thus practical use is possible depending on the intended use.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. A curable perfluoropolyether pressure sensitive adhesive composition comprising:
(A) a linear perfluoropolyether compound having at least two alkenyl groups per molecule and having a perfluoropolyether structure containing a repeating unit represented by -CₐF₂ₐO- in a main chain, wherein "a" represents an integer of 1 to 6: 100 parts by mass;
(B) an organosilicon compound having at least two hydrogen atoms each bonded to a silicon atom per molecule: an effective curing amount;
(C) a hydrosilylation reaction catalyst: a catalytic amount; and
(D) an antistatic agent: an effective amount.

2. The curable perfluoropolyether pressure sensitive adhesive composition according to claim 1, wherein
the component (A) is a linear perfluoropolyether compound represented by the following general formula (1), 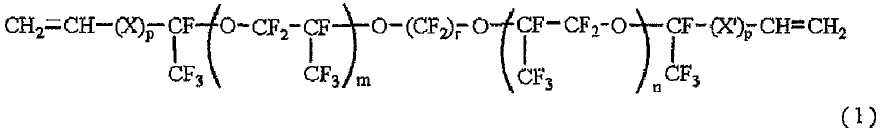
wherein X represents -CH₂-, -CH₂O-, -CH₂OCH₂-, or - Y-NR¹-CO-, provided that Y represents -CH₂- or a group represented by the following structural formula (Z), and R¹ represents a hydrogen atom, a methyl group, a phenyl group, or an allyl group; X' represents -CH₂-, -OCH₂-, - CH₂OCH₂-, or -CO-NR²-Y'-, provided that Y' represents - CH₂- or a group represented by the following structural formula (Z'), and R² represents a hydrogen atom, a methyl group, a phenyl group, or an allyl group; "p" independently represents 0 or 1; "r" represents an integer of 2 to 6; "m" and "n" each represents an integer of 0 to 600, and a sum of "m" and "n" is 50 to 600.

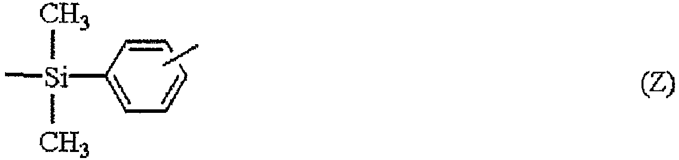

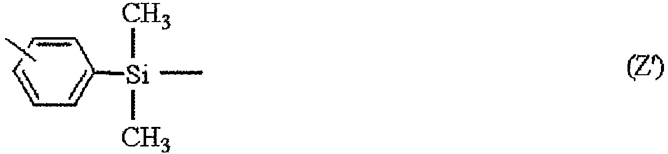

3. The curable perfluoropolyether pressure sensitive adhesive composition according to claim 1, wherein the antistatic agent as the component (D) is at least one selected from a conducting polymer, a surfactant, metal, metal oxide, and a carbon material.

4. The curable perfluoropolyether pressure sensitive adhesive composition according to claim 1, further comprising (E) an addition reaction regulator in an amount of 0.01 to 5 parts by mass relative to 100 parts by mass of the component (A).

5. The curable perfluoropolyether pressure sensitive adhesive composition according to claim 1, capable of providing a cured material having a volume resistivity of 1.0×10² to 1.0×10⁸ Ω·m.

6. The curable perfluoropolyether pressure sensitive adhesive composition according to claim 1, capable of curing to form a pressure sensitive adhesive having an adhesive strength of 0.001 N/25 mm to 10.0 N/25 mm.

7. A curable perfluoropolyether pressure sensitive adhesive composition comprising:
(A) a linear perfluoropolyether compound having at least two alkenyl groups per molecule and having a perfluoropolyether structure containing a repeating unit represented by -CₐF₂ₐO- in a main chain, wherein "a" represents an integer of 1 to 6: 100 to 40 parts by mass;
(F) a polyfluoromonoalkenyl compound having one alkenyl group per molecule and having a perfluoropolyether structure in a main chain: 0 to 60 parts by mass, provided that a total amount of the component (A) and the component (F) is 100 parts by mass;
(B) an organosilicon compound having at least two hydrogen atoms each bonded to a silicon atom per molecule: an effective curing amount;
(C) a hydrosilylation reaction catalyst: a catalytic amount; and
(D) an antistatic agent: an effective amount.

8. The curable perfluoropolyether pressure sensitive adhesive composition according to claim 7, wherein
the component (A) is a linear perfluoropolyether compound represented by the following general formula (1), 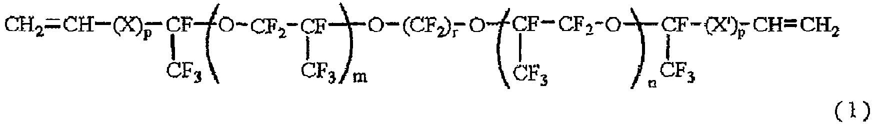
wherein X represents -CH₂-, -CH₂O-, -CH₂OCH₂-, or - Y-NR¹-CO-, provided that Y represents -CH₂- or a group represented by the following structural formula (Z), and R¹ represents a hydrogen atom, a methyl group, a phenyl group, or an allyl group; X' represents -CH₂-, -OCH₂-, - CH₂OCH₂-, or -CO-NR²-Y'-, provided that Y' represents - CH₂- or a group represented by the following structural formula (Z'), and R² represents a hydrogen atom, a methyl group, a phenyl group, or an allyl group; "p" independently represents 0 or 1; "r" represents an integer of 2 to 6; "m" and "n" each represents an integer of 0 to 600, and a sum of "m" and "n" is 50 to 600.

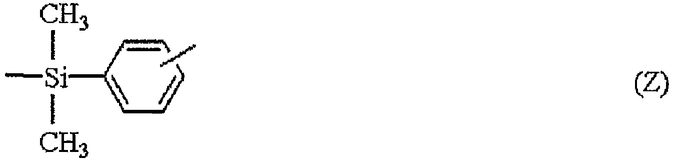

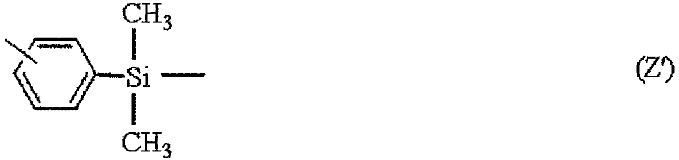

9. The curable perfluoropolyether pressure sensitive adhesive composition according to claim 7, wherein
the component (F) is a polyfluoromonoalkenyl compound represented by the following general formula (2),
Rf¹-(X')ₚ-CH=CH₂ (2)
wherein X' represents -CH₂-, -OCH₂-, -CH₂OCH₂-, or - CO-NR²-Y'-, provided that Y' represents -CH₂- or a group represented by the following structural formula (Z'), 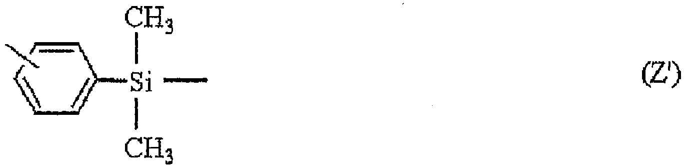 and R² represents a hydrogen atom, a methyl group, a phenyl group, or an allyl group; "p" represents 0 or 1; and Rf¹ represents a perfluoropolyether structure represented by a general formula, F-[CF(CF₃)CF₂O]_{w}-CF(CF₃)-, wherein "w" represents an integer of 1 to 500.

10. The curable perfluoropolyether pressure sensitive adhesive composition according to claim 7, wherein the antistatic agent as the component (D) is at least one selected from a conducting polymer, a surfactant, metal, metal oxide, and a carbon material.

11. The curable perfluoropolyether pressure sensitive adhesive composition according to claim 7, further comprising (E) an addition reaction regulator in an amount of 0.01 to 5 parts by mass relative to 100 parts by mass of the component (A) and the component (F) in total.

12. The curable perfluoropolyether pressure sensitive adhesive composition according to claim 7, capable of providing a cured material having a volume resistivity of 1.0×10² to 1.0×10⁸ Ω·m.

13. The curable perfluoropolyether pressure sensitive adhesive composition according to claim 7, capable of curing to form a pressure sensitive adhesive having an adhesive strength of 0.001 N/25 mm to 10.0 N/25 mm.

14. A pressure sensitive adhesive comprising a cured material of the curable perfluoropolyether pressure sensitive adhesive composition according to any one of claims 1 to 13.

15. A pressure sensitive adhesive tape comprising a cured material layer of the curable perfluoropolyether pressure sensitive adhesive composition according to any one of claims 1 to 13 laminated on a substrate.
